# EUROPEAN PATENT APPLICATION

(11) **EP 4 834 076 A1**
(43) Date of publication of application: **04.11.2026**
(21) Application number: 23963118.7
(22) Date of filing: 27.12.2023
(51) Int. Cl.: A01C 7/16, A01C 7/08, A01C 15/00

(54) **AGRICULTURAL MATERIAL INJECTION DEVICE**

(71) Applicant: KUBOTA CORPORATION, Osaka-shi, Osaka 530-0011 (JP)
(72) Inventor: TORIMOTO Masaru, Sakai-shi, Osaka 590-0908 (JP)
(74) Representative: Cabinet Beau de Loménie
(86) International application number: PCT/JP2023/046948
(87) International publication number: WO 2025/141769

(57) **Abstract**

Provided is an agricultural material injection apparatus that is capable of forcefully injecting an agricultural material but does not cause problems such as crushing or clogging of the agricultural material, and that is capable of operating in a favorable manner. An agricultural material injection apparatus includes: a storage section 7 configured to store the agricultural material; a feed section 8 configured to feed the agricultural material stored in the storage section 7; and an injection mechanism 10 configured to inject the agricultural material fed by the feed section 8 from an injection outlet 9 to a supply target location, the injection mechanism 10 including: a gas compression section configured to compress a gas; a gas passage section through which the compressed gas is passable from the gas compression section toward the injection outlet; and a temporary holder 42 capable of temporarily holding the agricultural material at an intermediate portion of a path of the gas passage section, wherein the temporary holder 42 is capable of temporarily holding the agricultural material fed from the feed section 8, and allows the agricultural material to be injected toward the supply target location by the compressed gas.

## Description

### Technical Field

The present invention relates to an agricultural material injection apparatus configured to be suspended and supported by an aircraft and to supply a granular agricultural material such as seed or fertilizer to a supply target location.

### Background Art

Conventionally, as an example of an agricultural material injection apparatus, there has been a seeding machine configured as follows.

The seeding machine includes a tank that stores seed as an example of an agricultural material, a feed mechanism that feeds the seed from the lower side of the tank, a shooter unit that drives the fed seed in a field, and a cylindrical guide body extending in an up-down direction that guides the seed fed by the feed mechanism to the shooter unit. The shooter unit includes a rotating body having a plurality of blades, which extend radially and are driven to rotate at high speed, and is configured to inject the seed that is fed from the feed mechanism and falls downward through the interior of the guide body, downward using the blades of the rotating body (e.g., see Patent Document 1).

### Prior Art Documents

### Patent Documents

Patent Document 1: WO2021/182108

### Disclosure of the Invention

### Problem to be Solved by the Invention

In the above conventional configuration, the agricultural material needs to be forcefully injected downward by blades, and therefore the rotating body needs to be driven to rotate at high speed. However, since the agricultural material falls freely toward the rotating body rotating at high speed, the agricultural material does not necessarily enter an upstream side of the blades in the rotation direction. For example, the agricultural material may be caught and jammed between a leading end portion of a blade and an inner surface of the cylindrical guide body. In such a state, there is concern that the blades may press the agricultural material against the inner surface of the guide body with great force, causing the agricultural material to be crushed, or causing clogging due to the agricultural material being caught, for example.

In view of this, there has been a demand for an agricultural material injection apparatus that is capable of forcefully injecting an agricultural material but does not cause problems such as crushing or clogging of the agricultural material, and that is capable of supplying the agricultural material to a supply target location in a favorable manner.

### Means for Solving Problem

A characteristic configuration of an agricultural material injection apparatus according to the present invention lies in an agricultural material injection apparatus configured to be suspended and supported by an aircraft and to supply a granular agricultural material to a supply target location, the agricultural material injection apparatus including: a storage section configured to store the agricultural material; a feed section configured to feed the agricultural material stored in the storage section; and an injection mechanism configured to inject the agricultural material fed by the feed section from an injection outlet to the supply target location, the injection mechanism including: a gas compression section configured to compress a gas; a gas passage section through which the compressed gas is passable from the gas compression section toward the injection outlet; and a temporary holder capable of temporarily holding the agricultural material at an intermediate portion of a path of the gas passage section, wherein the temporary holder is capable of temporarily holding the agricultural material fed from the feed section, and allows the agricultural material to be injected toward the supply target location by the compressed gas.

A gas such as air is compressed by the gas compression section, the gas compressed by the gas compression section is guided through the gas passage section to the injection outlet and is then injected from the injection outlet toward a supply target location such as a field. The temporary holder is provided at an intermediate portion of the path of the gas passage section. The temporary holder is capable of temporarily holding the agricultural material fed from the feed section. The compressed gas supplied through the gas passage section acts on the agricultural material temporarily held by the temporary holder, and the agricultural material is injected toward the supply target location.

With this configuration, the compressed gas efficiently acts on the temporarily held agricultural material, and the agricultural material can be injected forcefully. In addition, only the compressed gas acts on the agricultural material, and the agricultural material does not collide with objects moving at high speed, nor is the agricultural material caught between the objects.

Accordingly, it has become possible to forcefully inject the agricultural material but does not cause problems such as crushing or clogging of the agricultural material, and to inject the agricultural material to a supply target location in a favorable manner.

In the present invention, preferably, the temporary holder is made of a plate-shaped soft material, has a holding force that allows the temporary holder to receive the agricultural material, and includes a passage section through which the agricultural material is passable in response to an action of a pressing force applied by the compressed gas.

According to this configuration, the temporary holder can achieve a function of temporarily holding the agricultural material and a function of passing the agricultural material using the pressing force of the gas with a simple configuration using a plate-shaped soft material.

In the present invention, preferably, the temporary holder has arms extending radially around the passage section and arranged side by side in a circumferential direction, and a plurality of the arms are continuously connected on an outer circumferential portion side thereof, and are each formed in a cantilever shape in such a manner as to be elastically deformable on the passage section side thereof.

According to this configuration, the agricultural material can be efficiently received and held by the plurality of arms, and the passage section side of each arm is elastically deformed by the pressing force of the gas, thereby allowing the agricultural materials to pass. After the agricultural material has passed, the arms are restored to their original state by elastic force and become capable of receiving the agricultural material that is fed next time. With this configuration, the agricultural material can be held and pushed out by the gas with a simple configuration using elastic deformation of the members.

In the present invention, preferably, the gas compression section includes: a cylinder tube; a piston configured to slide within the cylinder tube; a gas supply and discharge means capable of switching between a supply state in which the gas is supplied into an internal space of the cylinder tube and a release state in which the internal space is opened to an outside; and a discharge section configured to discharge the gas supplied into the internal space and compressed, to the gas passage section from the cylinder tube in accordance with movement of the piston.

According to this configuration, upon a gas being supplied to the internal space of the cylinder tube by the gas supply and discharge means while the piston is stopped, the gas is compressed in the internal space. Then, the compressed gas is discharged toward the gas passage section through the discharge section in response to the piston moving with the gas compressed in the internal space. With this configuration, a simple configuration can be adopted in which the gas is injected toward the gas passage section by compressing the gas and moving the piston.

In the present invention, preferably, the agricultural material injection apparatus further includes: a first gas chamber located on a first side of the piston in a sliding direction thereof inside the cylinder tube, and a second gas chamber located on a second side of the piston in the sliding direction inside the cylinder tube; and a rod extending along the sliding direction on the first side of the piston in the sliding direction, wherein the discharge section is provided at an end portion of the cylinder tube on the first side in the sliding direction, the rod is switchable between a closed state in which the rod closes the discharge section and an open state in which the rod opens the discharge section to allow the gas to be discharged, in accordance with movement of the piston, in response to the gas supply and discharge means being switched to the supply state, the rod enters the closed state, and the gas is supplied to the first gas chamber and the second gas chamber and is compressed, and in response to the gas supply and discharge means being switched to the release state, the rod switches to the open state, and the gas compressed in the first gas chamber is discharged from the discharge section to an outside of the cylinder tube.

According to this configuration, in response to the gas supply and discharge means being switched to the supply state, the rod enters the closed state, and the gas is supplied to the first gas chamber and the second gas chamber and compressed. Thereafter, in response to the gas supply and discharge means being switched to the release state, the rod enters the open state, and the gas compressed in the first gas chamber is discharged from the discharge section. With this configuration, the configuration of the injection mechanism can be simplified by effectively using the rod provided in the piston.

### Brief Description of the Drawings

FIG. 1 is a front view illustrating a work system.
FIG. 2 is a plan view illustrating the work system.
FIG. 3 is a longitudinal side view of a seeding apparatus.
FIG. 4 is a longitudinal cross-sectional view of an injection mechanism.
FIG. 5 is an explanatory view illustrating operation of the injection mechanism.
FIG. 6 is a plan view of a temporary holder.
FIG. 7 is a perspective view of the temporary holder in an attached state.
FIG. 8 is a plan view of the temporary holder according to another embodiment.
FIG. 9 is a plan view of the temporary holder according to another embodiment.
FIG. 10 is a perspective view of the temporary holder according to another embodiment in an attached state.

### Best Mode for Carrying out the Invention

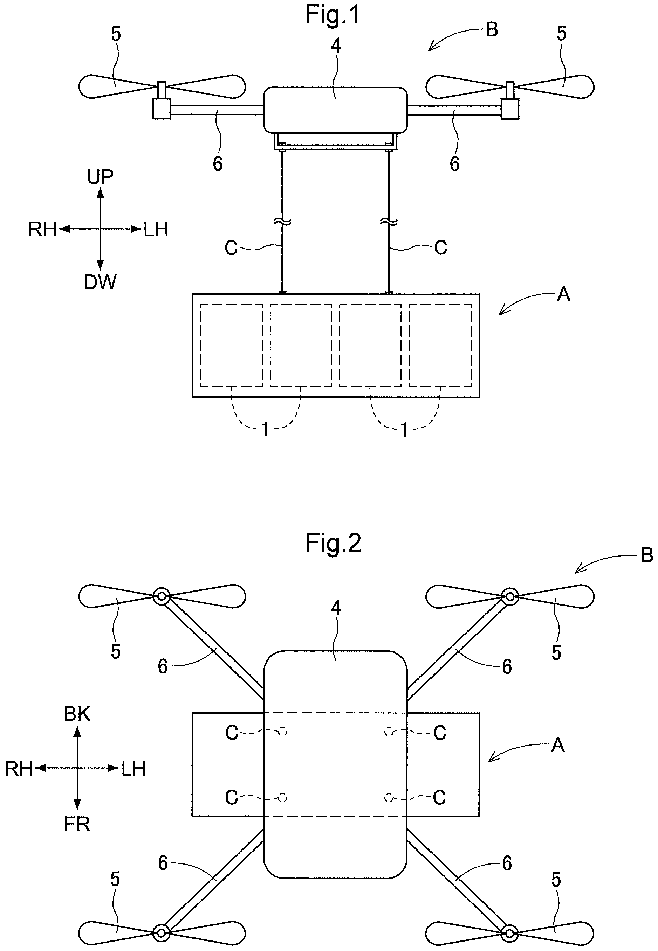

A mode for carrying out the present invention will be described below with reference to the drawings. Note that, unless otherwise stated in the following description, the term "front" refers to the direction indicated by arrow FR in FIG. 2, the term "rear" refers to the direction indicated by arrow BK, the term "left" refers to the direction indicated by arrow LH in FIGS. 1 and 2, and the term "right" refers to the direction indicated by arrow RH. The term "upper/above" refers to the direction indicated by arrow UP in FIG. 1, and the term "lower/below" refers to the direction indicated by arrow DW.

FIGS. 1 and 2 illustrate a work system for supplying an agricultural material to a field. The work system includes a work unit A that includes a plurality of seeding apparatuses 1, each of which is as an example of an agricultural material injection apparatus according to the present invention, an unmanned aircraft B referred to as a drone, and a plurality of connection bodies C for the aircraft B to suspend and support the work unit A. The aircraft B is capable of flying independently. The aircraft B includes a main body 4, a plurality of propellers 5, and a plurality of arms 6.

Although the number of propellers 5 and arms 6 is not particularly limited, four propellers 5 and four arms 6 are provided in the present embodiment. The four arms 6 extend from the main body 4 toward front-left, front-right, rear-left, and rear-right directions, respectively.

Each propeller 5 is driven by driving force of an electric motor (not shown). The aircraft B is capable of flying by driving each propeller 5. That is, by driving the propellers 5, the aircraft B is capable of moving in the up-down direction, the front-back direction, and the left-right direction while floating in the air. The aircraft B is also capable of hovering flight by driving the propellers 5.

Each seeding apparatus 1 is suspended and supported by the main body 4 via a plurality of connection bodies C (e.g., wires). A plurality of seeding apparatuses 1 are arranged side by side at intervals in the left-right direction and integrally combined to constitute the work unit 2. Although a case of using four connection bodies C is illustrated as an example, the number thereof is not limited to four and may be changed as appropriate.

The seeding apparatus 1 injects seed, which is an example of an agricultural material, whereby the seed can be driven into and supplied to a field. Although not described in detail, the flight state of the aircraft B is managed such that the seeding apparatus 1 moves along a path along which seeding is to be performed. Here, the aircraft B may repeat movement operation and position-stopping operation, and may perform seeding work during the position-stopping operation. Alternatively, seeding work may be performed while continuously moving by the aircraft B.

Although not illustrated, the aircraft B includes a satellite positioning device having a known configuration, and a flight control section that drives and controls the propellers 5 to control the movement state of the aircraft B. The satellite positioning device receives GNSS (Global Navigation Satellite System) signals from artificial satellites and generates positioning data indicating a position of the aircraft B based on the received signals. As the GNSS, GPS, QZSS, Galileo, GLONASS, BeiDou, or the like can be used. The flight control section drives and controls the propellers 5 based on measurement results of the satellite positioning device and preset field map data such that the aircraft B moves along a predetermined work path.

Next, a configuration of the seeding apparatus 1 will be described.

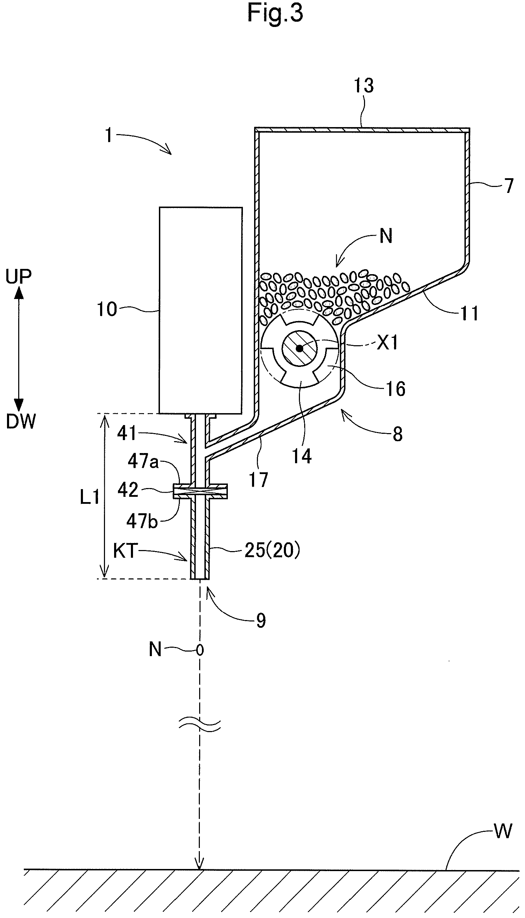

As illustrated in FIG. 3, the seeding apparatus 1 includes a hopper 7 serving as a storage section for storing seed, a feed section 8 that feeds the seed stored in the hopper 7, and an injection mechanism 10 that injects the seed fed by the feed section 8 from an injection outlet 9 toward a field W serving as a supply target location.

The hopper 7 has a storage space surrounded by side walls. An opening is formed at an upper portion of the storage space, through which a large amount of seed N can be loaded. After the seed N is loaded, the opening is closed by a lid 13 that is attachable and detachable. A flow guide section 11 having a tapered shape narrowing toward the lower side is provided at a lower portion of the hopper 7. The seed N can be discharged downward from a lower portion of the flow guide section 11. A feed roller 14 is provided at a discharging location.

The feed roller 14 is rotatably supported about an axis X1 extending in the left-right direction. Recesses 16 into which the seed N can enter are formed in an outer peripheral portion of the feed roller 14. A plurality of recesses 16 are formed at predetermined intervals in the circumferential direction. The feed roller 14 has a narrow width in the rotation axis direction such that one or several seeds N can enter each recess 16. The feed roller 14 is driven to rotate about the axis X1 by an electric motor (not shown).

As the feed roller 14 rotates, the seed N received in the recesses 16 is discharged downward. A cylindrical supply section 17 that guides the seed N discharged from the feed roller 14 is provided at a lower portion of the hopper 7.

The injection mechanism 10 is provided on a lateral side of the feed section 8. The seed N fed from the feed section 8 is injected by the injection mechanism 10 and forcefully supplied toward the field W.

The injection mechanism 10 in the embodiment of the present disclosure includes a gas compression section 18 that compresses a gas, and a gas guide section 20 that extends from the gas compression section 18 and has an injection outlet 9 at its leading end, and that guides the gas compressed by the gas compression section 18 to the injection outlet 9 while maintaining the pressure of the gas, and injects the seed N from the injection outlet 9 toward the field W.

The gas compression section 18 includes a cylinder tube 21, a piston 22 that slides within the cylinder tube 21, a gas supply and discharge means 23, and a discharge section 24. The gas supply and discharge means 23 is switchable between a supply state in which the gas is supplied into the internal space of the cylinder tube 21 and a release state in which the internal space is opened to the outside. The discharge section 24 discharges the gas supplied into the internal space and compressed to the outside of the cylinder tube 21 in accordance with movement of the piston 22.

The gas guide section 20 is provided in communication with the discharge section 24 and is constituted by a cylindrical guide member 25. The guide member 25 has an inner diameter that is smaller than an inner diameter of the cylinder tube 21 and that allows passage of the seed N.

The injection mechanism 10 will now be described in more detail.

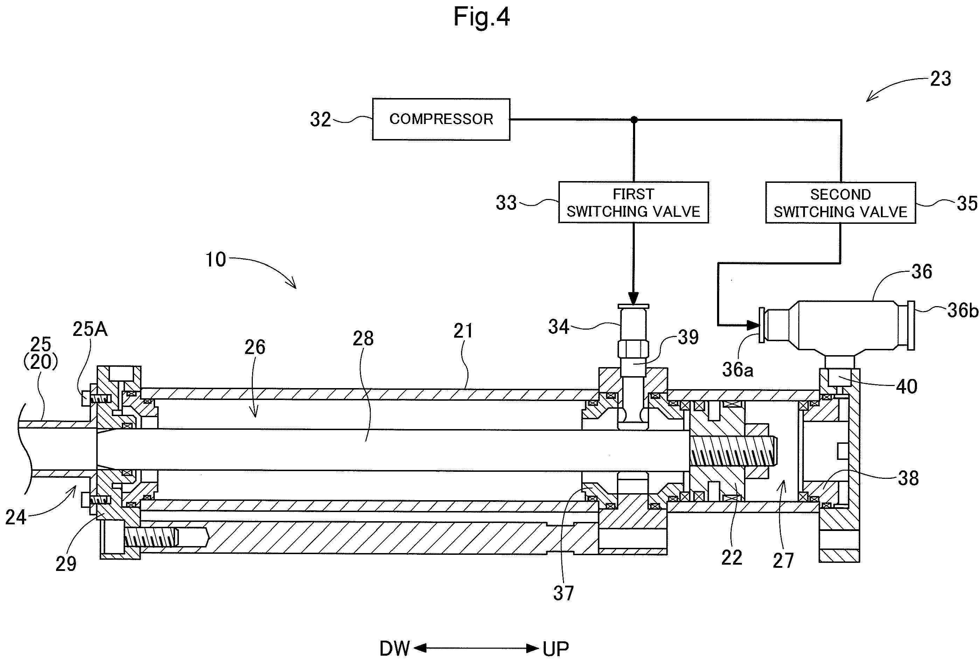

As shown in FIG. 4, the injection mechanism 10 includes the cylinder tube 21 and the piston 22 that slides within the cylinder tube 21. A first gas chamber 26 and a second gas chamber 27 are provided as internal spaces inside the cylinder tube 21. The first gas chamber 26 is located on a first side of the piston 22 in the sliding direction. The second gas chamber 27 is located on a second side of the piston 22 in the sliding direction.

A rod 28 extending in the sliding direction is provided on the first side of the piston 22 in the sliding direction. The discharge section 24 is provided at an end portion on the first side of the cylinder tube 21 in the sliding direction. The discharge section 24 is configured by forming an opening extending through one sealing block body 29 along the sliding direction. An end portion of the rod 28 on the first side in the sliding direction can be inserted into the opening of the discharge section 24.

The discharge section 24 is closed (as in the state illustrated in FIG. 4) upon the end portion of the rod 28 on the first side in the sliding direction being inserted into the opening of the discharge section 24. Upon the rod 28 sliding toward the second side in the sliding direction, the rod 28 is withdrawn from the opening and the discharge section 24 is opened. That is, the rod 28 is switchable between a closed state in which the rod 28 closes the discharge section 24 and an open state in which the rod 28 opens the discharge section 24 to allow gas ejection, in accordance with movement of the piston 22.

The gas supply and discharge means 23 is provided that is switchable between a supply state in which gas is supplied into the first gas chamber 26 and the second gas chamber 27 of the cylinder tube 21 and a release state in which the first gas chamber 26 and the second gas chamber 27 are opened to the outside.

As shown in FIG. 4, the gas supply and discharge means 23 includes a compressor 32 serving as a gas supply source, a first switching valve 33, a check valve 34, a second switching valve 35, and a quick exhaust valve 36.

The first switching valve 33 is switchable between a supply state in which the gas is output from the compressor 32 to the first gas chamber 26 and a stop state in which the output is stopped. The second switching valve 35 is switchable between a supply state in which the gas is output from the compressor 32 to the second gas chamber 27 and a stop state in which the output is stopped. In response to the second switching valve 35 being switched to the supply state, the quick exhaust valve 36 allows the gas to be supplied into the second gas chamber 27. In response to the second switching valve 35 being switched to the stop state, the quick exhaust valve 36 is switched to a state of rapidly opening the second gas chamber 27 to the outside while blocking a reverse flow toward the second switching valve 35 with the check valve 34.

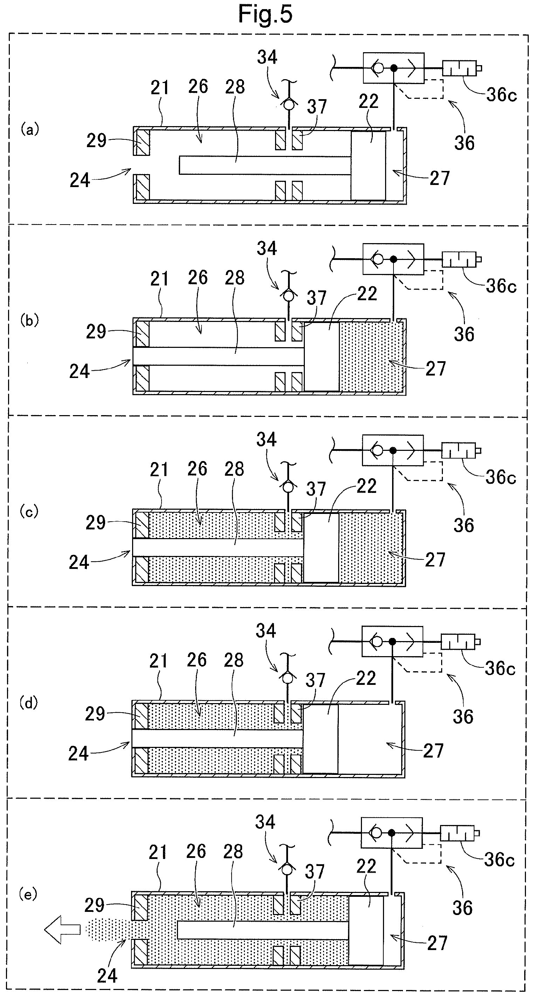

The quick exhaust valve 36 has a well-known configuration, and has an inlet 36a to which the gas is supplied from the second switching valve 35 and a discharge section 36b to which the gas inside the second gas chamber 27 is discharged. The quick exhaust valve 36 also includes a silencer 36c (see FIG. 5) that suppresses discharge noise while the gas inside the second gas chamber 27 is discharged.

The gas supply and discharge means 23 is capable of supplying the gas to the first gas chamber 26 and the second gas chamber 27 while the rod 28 is in a closed state. In response to the gas being supplied into the first gas chamber 26 and the second gas chamber 27, the gas is compressed in each of the first gas chamber 26 and the second gas chamber 27, in which the internal pressure increases. At this time, the rod 28 is maintained in the closed state due to a difference in the area of pressure acting surfaces of the piston 22. Thereafter, in response to the gas supply and discharge means 23 being switched from the supply state to the release state, the compressed gas in the second gas chamber 27 is released, switching the rod 28 to an open state and discharging the compressed gas from the discharge section 24.

A central sealing block body 37 is provided at an intermediate portion of the cylinder tube 21 in the sliding direction. The central sealing block body 37 is formed to be hollow to allow the rod 28 to be inserted. The piston 22 is slidable between the central sealing block body 37 and another sealing block body 38.

The cylinder tube 21 includes a first air supply section 39 and a second air supply section 40. The first air supply section 39 receives the gas supplied from the first switching valve 33. The second air supply section 40 receives the gas supplied from the second switching valve 35 via the quick exhaust valve 36. The first air supply section 39 is provided on the central sealing block body 37. The second air supply section 40 is provided on the other sealing block body 38.

### [Gas Guide Section]

As shown in FIGS. 3 and 4, a guide member 25 that constitutes the gas guide section 20 is provided outward of the first side of the cylinder tube 21 in the sliding direction. The guide member 25 is connected in communication with the opening of the discharge section 24. The gas discharged from the discharge section 24 is discharged downward through the guide member 25.

In response to the rod 28 being switched to the open state with the gas compressed in the internal space of the cylinder tube 21, the gas in the internal space is guided to the injection outlet 9 through the interior of the guide member 25 while maintaining high pressure without abruptly expanding at the discharge section 24. The seed N can be forcefully injected downward by the gas passing through the interior of the guide member 25.

The guide member 25 is mounted to the discharge section 24 of the cylinder tube 21 in an attachable and detachable manner. As shown in FIG. 4, a flange portion 25A is provided on an outer peripheral portion of an upper end portion of the guide member 25, and this flange portion 25A is bolted to an end portion of the cylinder tube 21. The guide member 25 can be removed from the cylinder tube 21 by releasing the bolt joint. The injection speed when the seed N is injected from the injection outlet 9 can be changed by changing the guide length of the guide member 25 or changing the pressure of the gas generated by the compressor 32.

The supply section 17 is connected in communication with an intermediate portion of the guide member 25 in the up-down direction. The seed N fed from the feed section 8 through the supply section 17 is supplied into the interior of the guide member 25. The supplied seed N is injected toward the field W by the gas forcefully ejected from the discharge section 24.

### [Temporary holder]

The guide member 25 functions as a gas passage section KT through which the compressed gas passes from the gas compression section 18 toward the injection outlet 9. A temporary holder 42 capable of temporarily holding the seed N is provided at an intermediate portion of the path of the gas passage section KT. The temporary holder 42 is capable of temporarily holding the seed N fed from the feed section 8, and allows the seed N to be injected toward the field W serving as the supply target location, using the compressed gas.

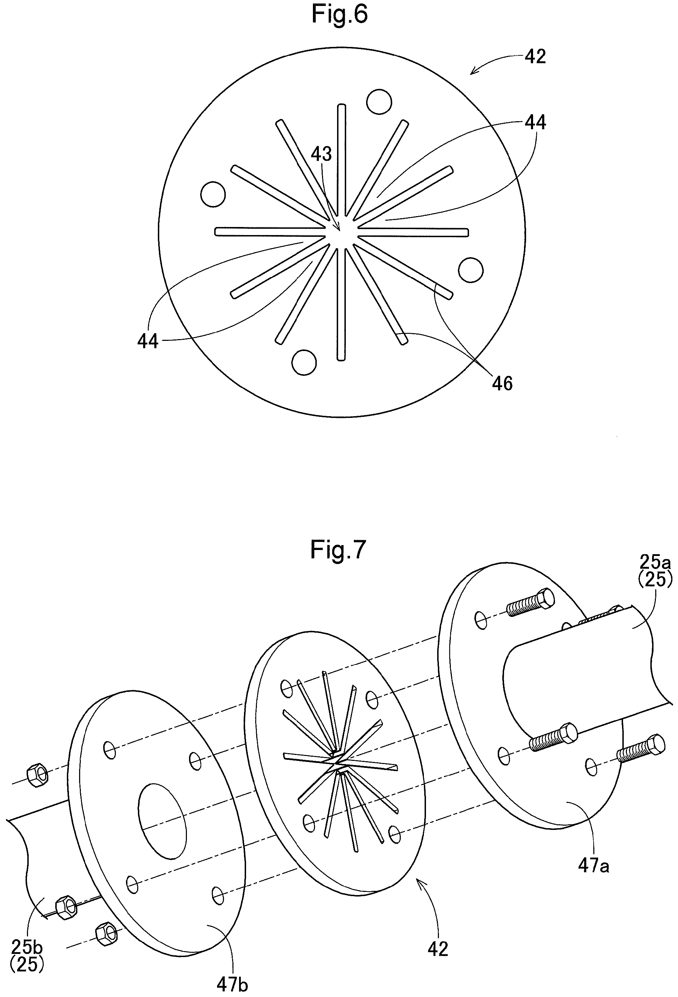

As shown in FIGS. 6 and 7, the temporary holder 42 is made of a circular plate-shaped soft material such as rubber, has a holding force that allows it to receive the seed N, and includes a passage section 43 through which the seed N can pass in response to the action of the pressing force applied by the compressed gas. The passage section 43 is surrounded by arms 44 each having a widening shape with a width that increases towards the outer side, and the arms 44 are arranged side by side in its circumferential direction. The plurality of arms 44 are continuously connected on the outer circumference side and are each formed in a cantilever shape so as to be elastically deformable on the passage section 43 side.

In other words, the temporary holder 42 has an insertion hole 45 formed at a center portion of a circular rubber plate, with a diameter smaller than that of the seed N. A plurality of cutouts 46 are formed, each extending radially from the insertion hole 45 to an intermediate portion in the radial direction, and the plurality of arms 44 are formed by a plurality of regions sandwiched between the cutouts 46. A configuration in which the insertion hole 45 is not formed may alternatively be employed as a configuration in which the arms 44 extend to a center portion.

As shown in FIGS. 3 and 7, the temporary holder 42 has a larger diameter than the guide member 25 and is sandwiched between upper and lower holding plates 47a and 47b. The guide member 25 is divided into upper and lower parts at its intermediate portion, with the upper holding plate 47a integrally joined to an outer circumferential portion of a lower end portion of an upper guide member 25a, and the lower holding plate 47b integrally joined to an outer circumferential portion of an upper end portion of a lower guide member 25b. With the temporary holder 42 sandwiched by the upper holding plate 47a and the lower holding plate 47b, the upper holding plate 47a and the lower holding plate 47b are fastened and fixed to each other by a plurality of bolts.

By providing such a temporary holder 42 at an intermediate portion of the path, the seed N fed from the feed section 8 is temporarily received and held by this temporary holder 42. Thereafter, upon the compressed gas being ejected from the gas compression section 18, the pressure of the ejected gas deforms the arms 44 of the temporary holder 42, and the seed N is forcefully injected towards the field W.

### [Operation of Injection Mechanism]

Next, operations of the injection mechanism 10 will now be described.

In a standby state illustrated in FIG. 5(a), both the first gas chamber 26 and the second gas chamber 27 are in an open state. In response to the second switching valve 35 being switched to the supply state, the gas is supplied into the second gas chamber 27 of the cylinder tube 21 through the second air supply section 40.

As illustrated in FIG. 5(b), in response to the gas being supplied into the second gas chamber 27, the piston 22 slides toward the first side in the sliding direction, and the rod 28 is switched to the closed state in which the discharge section 24 is closed.

As illustrated in FIG. 5(c), in response to a supply of the gas to the first gas chamber 26 being started while the supply of the gas to the second gas chamber 27 is continued, the internal pressure in the first gas chamber 26 and the second gas chamber 27 increases due to compression of the gas. This state corresponds to the supply state of the gas supply and discharge means 23. At this time, the rod 28 is maintained in the closed state. That is, since the area of the pressure acting surface of the piston 22 on the second gas chamber 27 side is greater than the area of the pressure acting surface of the piston 22 on the first gas chamber 26 side, the piston 22 is pushed toward the first gas chamber 26, and the rod 28 is maintained in the closed state.

As illustrated in FIG. 5(d), in response to the first switching valve 33 being switched to the stop state, the compressed gas stored in the second gas chamber 27 is discharged to the outside through the quick exhaust valve 36.

As illustrated in FIG. 5(e), as the internal pressure in the second gas chamber 27 decreases, the piston 22 moves toward the second side in the sliding direction (toward the second gas chamber 27) due to a pressure difference between the first gas chamber 26 and the second gas chamber 27, and the rod 28 enters the open state. This operation corresponds to the gas supply and discharge means 23 being switched to the release state.

As a result, the discharge section 24 is opened, and the compressed gas retained in the first gas chamber 26 is forcefully discharged from the discharge section 24. The gas forcefully discharged from the discharge section 24 is then guided to the injection outlet 9 via the guide member 25, and the seed N fed from the feed section 8 is injected toward the field W.

### [Other Embodiments]

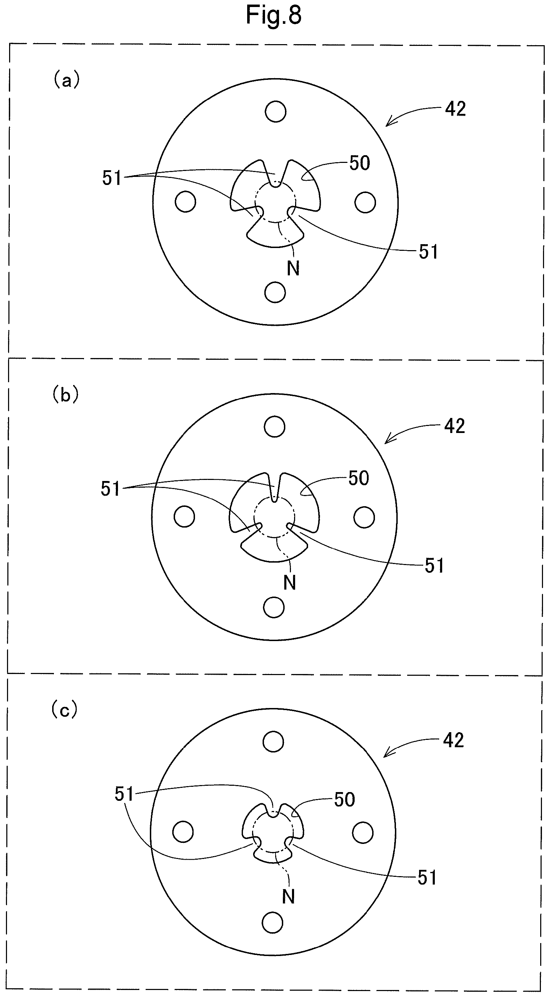

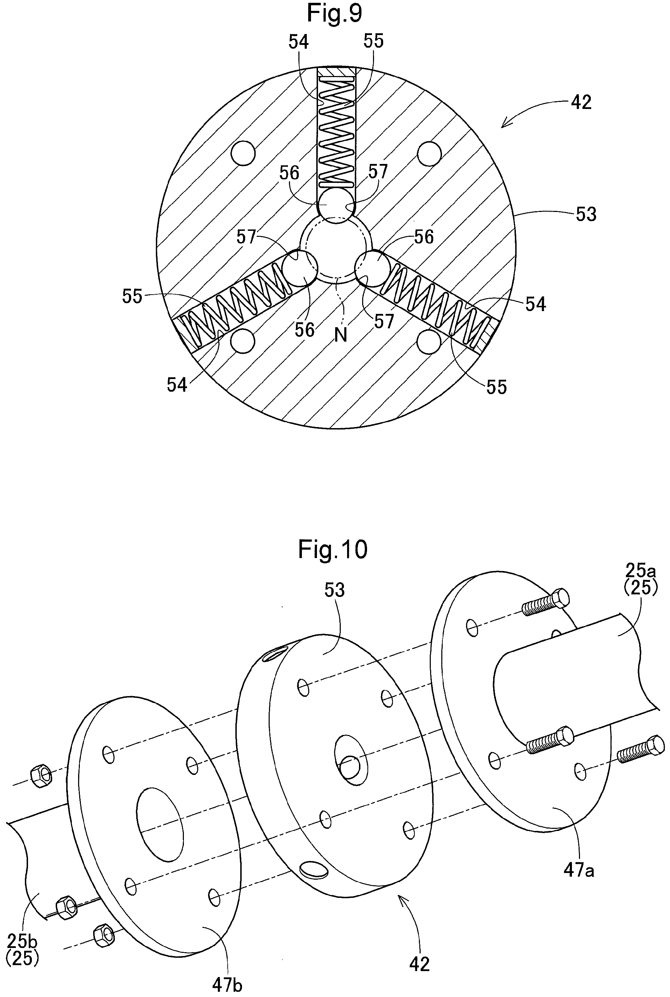

(1) The temporary holder 42 may be configured as follows.
   While the temporary holder 42 has holding force that allows it to receive the seed N (agricultural material) as in the above embodiment, the passage section may be configured as follows. That is, as shown in FIG. 8, a substantially circular insertion hole 50 having a diameter larger than that of the agricultural material is formed at a center portion of a disk-shaped rubber plate. Protrusions 51 that protrude inward in the radial direction are integrally formed at portions spaced approximately 120 degrees from each other in the circumferential direction on an inner circumferential portion of the insertion hole 50. An imaginary circle passing through leading ends of the protrusions 51 is smaller than the outer shape of the seed N. In this configuration, the seed N is received and supported by three protrusions 51. Further, as shown in FIGS. 8(a), 8(b), and 8(c), the width of each protrusion 51 may be changed, and the inner diameter of the insertion hole 50 may be changed.
(2) The temporary holder 42 may be configured as follows.
   Instead of providing a plate-shaped soft material, as shown in FIG. 9, a cylindrical container 53 through which the seed N can pass is provided, and three through holes 54 extending along the radial direction are formed at portions spaced approximately 120 degrees from each other in the circumferential direction inside the container 53. A spherical holding member 56, which is movable in the radial direction and is biased to move inward in the radial direction by a coil spring 55, is provided in each insertion hole 54. The three holding members 56 are received by respective locking portions 57 at positions protruding a predetermined amount inward in the radial direction from an inner circumferential surface of the container 53, and are held at these positions. The temporary holder 42 is held and sandwiched between the upper holding plate 47a and the lower holding plate 47b, as in the above embodiment. According to this configuration, upon the seed N being supplied, the seed N is received and held by the three holding members 56. The biasing force of the coil springs 55 that bias the holding members 56 is set such that the holding members 56 have a holding force that allows them to receive the seed N, and such that the seed N can pass in response to the action of the pressing force applied by the compressed gas.
(3) A guide member 25 having a fixed guide length may be fixed to the cylinder tube 21. In this case, the injection speed when the seed N is injected from the injection outlet 9 may be changed by changing the pressure of the gas generated by the compressor 32.
(4) The aircraft B may be of a drive type in which the propellers are driven by an internal combustion engine, or a parallel hybrid drive type in which the propellers are driven using an electric motor and an internal combustion engine. Alternatively, a series hybrid drive type may be adopted in which a generator is driven by an internal combustion engine and an electric motor is driven by generated electric power. The aircraft B is not limited to an unmanned flight configuration, and may be configured to fly while being piloted by a person.
(5) As a gas supply source, the following configuration may be adopted instead of the compressor 32.
   For example, a configuration may be adopted in which a liquid substance having a property of being easily vaporized is stored in a tank, and gas that is generated by vaporization of the liquid from an internal space of the tank and forcefully expands from a discharge section is ejected through an on-off valve. Alternatively, a configuration may be adopted in which the pressure in the internal space of the cylinder tube is increased by sliding the piston using an actuator. Thus, various configurations can be adopted as the gas supply source.
(6) A configuration may be adopted in which, as the gas compression section 18, a backflow prevention section that is configured to supply gas from a gas supply source (compressor) only into the second gas chamber 27 and allows the gas to move only in one direction from the second gas chamber 27 toward the first gas is provided, whereby the gas is compressed not only in the second gas chamber 27 but also in the first gas chamber 26. In this case, the number of gas supply paths is reduced, and simplification of the configuration can be achieved.
(7) The agricultural material is not limited to seed N, and fertilizer, a chemical agent, or the like may be injected.

### Industrial Applicability

The present invention can be applied to an agricultural material injection apparatus configured to be suspended and supported by an aircraft and to supply a granular agricultural material such as seed N or fertilizer to a supply target location.

### Description of Reference Signs

7: Storage section
8: Feed section
9: Injection outlet
10: Injection mechanism
18: Gas compression section
20: Gas guide section
21: Cylinder tube
22: Piston
23: Gas supply and discharge means
24: Discharge section
26: First gas chamber
27: Second gas chamber
28: Rod
42: Temporary holder
43: Passage section
44: Arm
B: Aircraft
KT: Gas passage section

## Claims

1. An agricultural material injection apparatus configured to be suspended and supported by an aircraft and to supply a granular agricultural material to a supply target location, the agricultural material injection apparatus comprising:
a storage section configured to store the agricultural material; a feed section configured to feed the agricultural material stored in the storage section; and an injection mechanism configured to inject the agricultural material fed by the feed section from an injection outlet to the supply target location,
the injection mechanism including:
a gas compression section configured to compress a gas;
a gas passage section through which the compressed gas is passable from the gas compression section toward the injection outlet; and
a temporary holder capable of temporarily holding the agricultural material at an intermediate portion of a path of the gas passage section,
wherein the temporary holder is capable of temporarily holding the agricultural material fed from the feed section, and allows the agricultural material to be injected toward the supply target location by the compressed gas.

2. The agricultural material injection apparatus according to claim 1,
wherein the temporary holder is made of a plate-shaped soft material, has a holding force that allows the temporary holder to receive the agricultural material, and includes a passage section through which the agricultural material is passable in response to an action of a pressing force applied by the compressed gas.

3. The agricultural material injection apparatus according to claim 2,
wherein the temporary holder has arms extending radially around the passage section and arranged side by side in a circumferential direction, and
a plurality of the arms are continuously connected on an outer circumferential portion side thereof, and are each formed in a cantilever shape in such a manner as to be elastically deformable on the passage section side thereof.

4. The agricultural material injection apparatus according to claim 1,
wherein the gas compression section includes: a cylinder tube; a piston configured to slide within the cylinder tube; a gas supply and discharge means capable of switching between a supply state in which the gas is supplied into an internal space of the cylinder tube and a release state in which the internal space is opened to an outside; and a discharge section configured to discharge the gas supplied into the internal space and compressed, to the gas passage section from the cylinder tube in accordance with movement of the piston.

5. The agricultural material injection apparatus according to claim 4, further comprising:
a first gas chamber located on a first side of the piston in a sliding direction thereof inside the cylinder tube, and a second gas chamber located on a second side of the piston in the sliding direction inside the cylinder tube; and
a rod extending along the sliding direction on the first side of the piston in the sliding direction,
wherein the discharge section is provided at an end portion of the cylinder tube on the first side in the sliding direction,
the rod is switchable between a closed state in which the rod closes the discharge section and an open state in which the rod opens the discharge section to allow the gas to be discharged, in accordance with movement of the piston,
in response to the gas supply and discharge means being switched to the supply state, the rod enters the closed state, and the gas is supplied to the first gas chamber and the second gas chamber and is compressed, and
in response to the gas supply and discharge means being switched to the release state, the rod switches to the open state, and the gas compressed in the first gas chamber is discharged from the discharge section to an outside of the cylinder tube.
